# FASCICULE DE BREVET EUROPEEN

(11) **EP 2 604 518 B1**
(45) Date de publication et mention de la délivrance du brevet: **16.07.2014**
(21) Numéro de dépôt: 12195974.6
(22) Date de dépôt: 06.12.2012
(51) Int. Cl.: B64C 25/00, B64C 25/30, B64F 5/00, B64C 25/44, B64C 25/18

(54) **Procédé de gestion de systèmes liés au train d'atterrissage d'un aéronef**
Steuerverfahren in Verbindung mit einem Flugzeugfahrwerk
A method of managing systems associated with the landing gear of an airraft

(30) Priorité: 15.12.2011 FR 1161712
(43) Date de publication de la demande: 19.06.2013
(73) Titulaire: Messier-Bugatti-Dowty, 78140 Velizy Villacoublay (FR)
(72) Inventeur: Frank, David, 78140 Velizy-Villacoublay (FR)
(74) Mandataire: Parzy, Benjamin Alain

(56) Documents cités:
- EP-A1- 1 739 010
- WO-A1-2011/072366
- FR-A1- 2 875 475

## Description

L'invention est relative à un procédé de gestion de systèmes liés au train d'atterrissage d'un aéronef.

### ARRIERE-PLAN TECHNOLOGIQUE

Les aéronefs sont généralement équipés de roues associées à des freins alimentés par un circuit de freinage pour appliquer sélectivement un couple de freinage aux roues et ainsi ralentir l'aéronef. Un ou des calculateurs de freinage contrôlent, dans un mode de freinage normal, l'application de couple en réponse à un ordre de freinage donné par le pilote, par exemple en appuyant sur les pédales de freinage ou en enclenchant un mode de freinage automatique dit « autobrake ». Dans ce mode, le calculateur met en oeuvre une protection d'antidérapage. L'état de la technique est notamment illustré par le document EP1739010A1.

On prévoit généralement un deuxième calculateur de freinage pour prendre le relais du premier calculateur de freinage en cas de défaillance de ce dernier. On parle alors de mode de freinage alternatif ou de secours. Ces modes requièrent des logiques complexes, ne pouvant être assurées qu'au moyen de calculateurs et programmes sophistiqués.

Par ailleurs un mode de freinage de parc est habituellement disponible pour actionner les freins en vue d'immobiliser l'aéronef au parking lorsqu'il est arrêté.

En général, on cherche à assurer ce mode de freinage de la façon la plus simple et fiable possible. Ainsi, sur les aéronefs à freinage hydraulique, le frein de parc est en général assuré au moyen d'un levier disposé dans le cockpit pour être manoeuvré par le pilote et qui commande à l'aide de câbles et de poulies une vanne de freinage de parc pour transmettre aux freins toute ou partie de la pression d'un accumulateur disposé sur le circuit de freinage.

La manette de frein de parc peut être utilisée en ultime secours pour freiner l'aéronef, lorsque les modes de freinage normaux ou alternatifs sont défaillants. Dans ce mode secours, le pilote ne dispose pas de la protection antidérapage et doit donc doser son effort sur la manette, en ne bénéficiant que d'un ressenti approximatif. En outre, la même pression est appliquée à tous les freins simultanément, ce qui ne permet aucun freinage différentiel.

Par ailleurs, l'aéronef est également équipé d'un système de manoeuvre des atterrisseurs entre une position stockée et une position déployée. Le système comporte des actionneurs de manoeuvre pour ouvrir et refermer les trappes des soutes recevant les atterrisseurs, ainsi que pour provoquer la descente ou la remontée des atterrisseurs. Des boîtiers d'accrochage permettent de maintenir les trappes et les atterrisseurs en position remontée et verrouillée lors du vol de l'aéronef.

L'aéronef est équipé d'un système de sortie secours permettant la libération des atterrisseurs et leur sortie sous l'effet de la gravité, en cas de défaillance du système de manoeuvre des atterrisseurs. Le système de sortie secours comporte en général une manette actionnée par le pilote et qui est reliée aux boîtiers d'accrochage par des câbles pour manoeuvrer les crochets des boîtiers d'accrochage et ainsi déverrouiller les atterrisseurs et les trappes.

Par ailleurs, les aéronefs sont parfois munis d'un boîtier de maintenance permettant, lorsque l'avion est au sol et à l'arrêt, d'activer certaines fonctions de l'aéronef pour vérifier le bon fonctionnement de celles-ci. Ce boîtier de maintenance est souvent le calculateur principal de freinage, incluant une fonction de tests de maintenance. Ce boîtier, notamment alimenté par les batteries de l'aéronef, permet uniquement d'activer tel ou tel actionneur, selon une logique extrêmement simple. Le boîtier de maintenance peut ainsi par exemple commander le déverrouillage des trappes et des atterrisseurs pour, lorsque l'aéronef a été mis sur chandelles, vérifier la bonne descente des atterrisseurs jusqu'à leur position déployée.

### OBJET DE L'INVENTION

L'objet de l'invention est de proposer un système de commande des atterrisseurs et de leurs fonctions associées offrant un mode secours très simple à mettre en oeuvre.

### BREVE DESCRIPTION DE L'INVENTION

En vue de la réalisation de ce but, on propose un procédé de gestion d'aéronef comportant des atterrisseurs portant un certain nombre de roues freinées, l'aéronef comportant :
- un système de manoeuvre des atterrisseurs comportant des actionneurs de manoeuvre et d'accrochage des atterrisseurs et de trappes associées,
- un système de freinage comportant des actionneurs de freinage des roues de l'aéronef;
- au moins une unité de commande pour commander la manoeuvre des atterrisseurs et le freinage ;
- au moins un boîtier de maintenance, pour commander sélectivement au moins certains des actionneurs desdits systèmes alors que l'aéronef est à l'état éteint lors d'opérations de maintenance de l'un ou l'autre des systèmes.

Selon l'invention, le procédé comporte l'étape d'activer le boîtier de maintenance alors que l'aéronef n'est pas dans l'état éteint pour assurer, au moyen du boîtier de maintenance, l'actionnement des actionneurs reliés au boîtier de maintenance, notamment en cas de défaillance de l'unité de commande.

Le secours réalisé au moyen du boîtier de maintenance remplace avantageusement les secours mécaniques à base de câbles et poulies.

Ainsi, on profite du boîtier de maintenance pour assurer en secours l'actionnement des actionneurs du système de manoeuvre ou du système de freinage, lorsque le calculateur ou tout autre élément du système concerné est défaillant et empêche le fonctionnement normal du système. Il n'est dès lors plus besoin de prévoir dans chacun des systèmes une voie secours spécifique pour palier à la défaillance de la voie normale.

Par état éteint, on entend que les systèmes avioniques principaux sont éteints, les propulseurs étant à l'arrêt. Dans cet état, le boîtier de maintenance peut être alimenté par la batterie, (ou un réseau externe le cas échéant), le reste de l'aéronef restant hors tension.

### BREVE DESCRIPTION DES DESSINS

L'invention sera mieux comprise à la lumière de la description qui suit des figures des dessins annexés, parmi lesquelles :
- la figure 1 est une vue schématique d'un aéronef permettant de situer les divers actionneurs de freinage et de manoeuvre des atterrisseurs ;
- les figures 2A et 2B, complémentaires, sont des vues schématique d'un circuit de commande de divers actionneurs d'un aéronef, selon un mode particulier de mise en oeuvre de l'invention ;
- la figure 3 est une vue de principe de l'activation du boîtier de maintenance ;
- la figure 4 est un schéma d'une autre architecture selon l'invention montrant l'actionnement des actionneurs par une liaison spécifique d'actionnement.

### DESCRIPTION DETAILLEE DES FIGURES

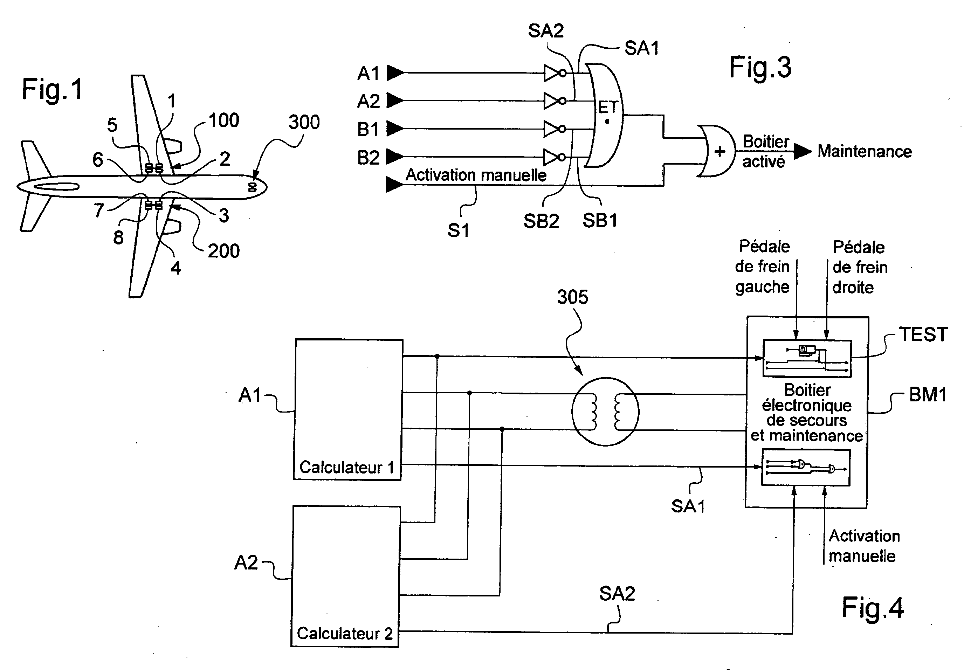

On va ici décrire l'invention en application à un aéronef de type commercial classique tel que représenté à la figure 1 comportant un atterrisseur principal gauche 100, un atterrisseur principal droit 200, et un atterrisseur auxiliaire 300. L'architecture décrite ici est choisie à titre d'exemple, mais n'est pas limitative. Une telle architecture est décrite en détail dans le document EP 1739010 A1.

L'atterrisseur principal gauche 100 porte quatre roues freinées équipées de freins ou actionneurs de freinage respectivement référencés 1, 2, 5, 6 tandis que l'atterrisseur principal droit 200 porte quatre roues freinées équipées de freins ou actionneurs de freinage respectivement référencées 3, 4, 7, 8.

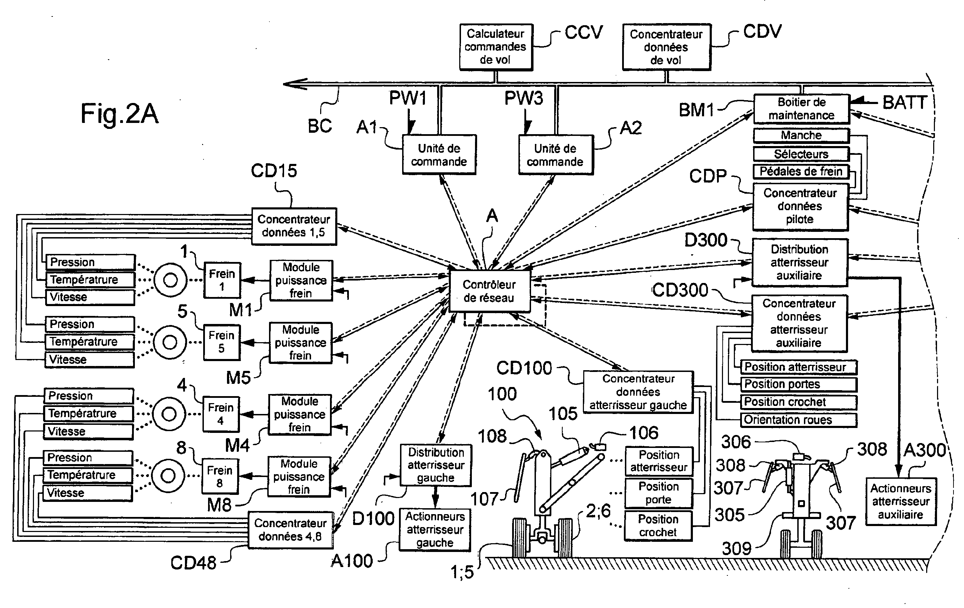

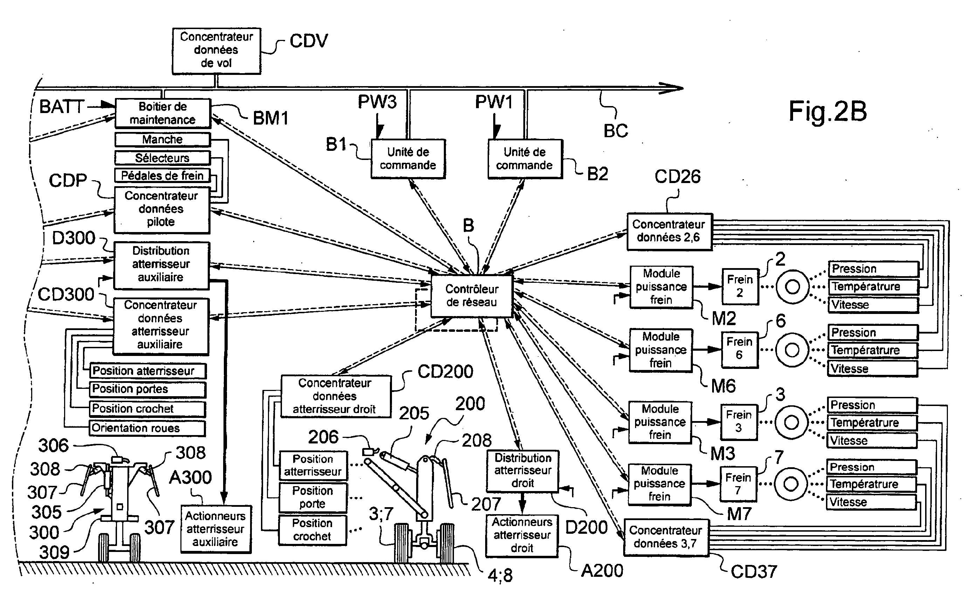

L'architecture de commande des systèmes est maintenant détaillée en référence aux figures 2A et 2B, prises ensemble.

L'atterrisseur principal gauche 100 est associé pour sa manoeuvre à un vérin de relevage 105 et à un crochet de verrouillage 106. Des portes 107 munies de vérins de manoeuvre 108 ouvrent et ferment la soute de réception de l'atterrisseur principal gauche 100.

De même, l'atterrisseur principal droit 200 est associé pour sa manoeuvre à un vérin de relevage 205 et à un crochet de verrouillage 206. Des portes 207 munies de vérins de manoeuvre 208 ouvrent et ferment la soute de réception de l'atterrisseur principal droit 200.

Enfin, l'atterrisseur auxiliaire 300 est associé pour sa manoeuvre à un vérin de relevage 305 et à un crochet de verrouillage 306. Des portes 307 munies de vérins de manoeuvre 308 ouvrent et ferment la soute de réception de l'atterrisseur auxiliaire 300. L'atterrisseur auxiliaire 300 comporte en outre un organe d'orientation 309 (par exemple un vérin à crémaillère) pour commander la rotation des roues portées par le dit atterrisseur en vue de diriger l'aéronef au sol.

Chacun des freins 1, 2... 8 est associé à un module de puissance M1, M2... M8 correspondant chargé de transmettre au frein associé une puissance proportionnelle à une consigne de freinage. Dans le cas de freins hydrauliques, le module de puissance est une servovalve adaptée à transmettre au frein une pression proportionnelle à une consigne électrique de freinage. Dans le cas de freins électromécaniques, le module de puissance est un convertisseur adapté à transmettre au frein un courant de puissance proportionnel à une consigne électrique de freinage.

De même, chacun des actionneurs d'un atterrisseur est associé à un organe de distribution de puissance chargé d'alimenter les actionneurs en réponse à des ordres d'actionnement. Sur l'architecture, les actionneurs sont regroupés symboliquement dans les cases actionneurs atterrisseur gauche, actionneurs atterrisseur droit et actionneurs atterrisseur auxiliaire, respectivement référencées A100, A200 et A300. Les organes de distribution de puissance correspondants sont référencés D100, D200 et D300.

Dans le cas d'actionneurs hydrauliques, l'organe de distribution comprend diverses vannes commandées électriquement permettant de relier sélectivement les actionneurs à une source de pression de l'aéronef. Dans le cas d'actionneurs électriques, l'organe de distribution comprend des interrupteurs commandés électriquement permettant de relier sélectivement les actionneurs à une source de courant de l'aéronef.

Les flèches en traits épais symbolisent le flux de puissance vers les freins et vers les actionneurs.

L'architecture de l'invention illustrée ici permet de gérer toutes les fonctionnalités associées aux atterrisseurs : freinage, manoeuvre, orientation, en agissant sur les divers actionneurs associés aux atterrisseurs.

Pour ce faire, l'architecture présentée ici met en oeuvre un premier réseau de communication en étoile A et un deuxième réseau de communication en étoile B, les références A et B étant utilisées par la suite pour désigner le réseau de communication lui-même ou le contrôleur de réseau associé, que l'on distingue sur les figures au centre du réseau de communication correspondant.

Le contrôleur de réseau A est relié :
- aux modules de puissance M1 et M5 des freins 1 et 5 externes de l'atterrisseur principal gauche 100 ;
- aux modules de puissance M4 et M8 des freins 4 et 8 externes de l'atterrisseur principal droit 200 ;
- à l'organe de distribution D100 associé aux actionneurs de manoeuvre A100 de l'atterrisseur principal gauche 100 ;
- à l'organe de distribution D300 associé aux actionneurs de manoeuvre et d'orientation A300 de l'atterrisseur auxiliaire 300.

Le contrôleur de réseau A est également relié à deux unités de commande A1 et A2 qui sont aptes à générer des consignes ou des ordres à destination des modules de puissance et des organes de distribution reliés au contrôleur de réseau A. Les deux unités de commande sont en permanence actives, l'une des unités de commande générant les consignes et ordres en étant surveillée par l'autre unité de commande.

Les unités de commande A1 et A2 sont donc aptes à gérer :
- le freinage des freins 1, 5, 4, 8 ;
- la manoeuvre de l'atterrisseur principal gauche 100 et la manoeuvre de l'atterrisseur auxiliaire 300 ;
- l'orientation des roues de l'atterrisseur auxiliaire 300.

Pour ce faire, les unités de commande A1 et A2 reçoivent des informations de concentrateurs de données également reliés au réseau de communication A :
- un concentrateur de données CD15 qui reçoit et met en forme des informations électriques telles que la pression dans les pneumatiques des roues 1, 5, la température des freins 1, 5, la vitesse de rotation des roues 1, 5, ces informations provenant de capteurs associés aux freins 1 et 5.
- un concentrateur de données CD48 qui reçoit et met en forme des informations électriques telles que la pression dans les pneumatiques des roues 4,8, la température des freins 4, 8, la vitesse de rotation des roues 4, 8, ces informations provenant de capteurs associés aux freins 4, 8 ;
- un concentrateur de données CD100 de l'atterrisseur principal gauche 100 qui reçoit et met en forme des informations de position de l'atterrisseur (enfoncement de l'amortisseur, position angulaire du balancier portant les roues...) ou des informations d'états liés à la manoeuvre de l'atterrisseur tels que des portes (ouverte, fermée), des crochets de verrouillage (verrouillé, déverrouillé);
- un concentrateur de données CD300 de l'atterrisseur auxiliaire 300 qui reçoit et met en forme des informations de position de l'atterrisseur auxiliaire (enfoncement de l'amortisseur, position angulaire du balancier portant les roues...) ou d'informations d'états liées à la manoeuvre de l'atterrisseur tels que des portes (ouverte, fermée), des crochets de verrouillage (verrouillé, déverrouillé), mais également des informations sur la position angulaire des roues de l'atterrisseur auxiliaire;
- un concentrateur des données pilote CDP qui reçoit et met en forme des signaux en provenance des pédales de frein, de divers commutateurs de volants d'orientation ou encore de manches actionnés par le pilote ou le copilote (en variante, on pourra prévoir des concentrateurs de données séparés pour le pilote et pour le copilote).

L'architecture de l'invention comporte ici un second réseau de communication en étoile B comportant un contrôleur de réseau qui est relié :
- aux modules de puissance M2 et M6 des freins 2 et 6 internes de l'atterrisseur principal gauche 100 ;
- aux modules de puissance M3 et M7 des freins 3 et 7 internes de l'atterrisseur principal droit 200 ;
- à l'organe de distribution D200 associé aux actionneurs A200 de l'atterrisseur principal droit 200 ;
- à l'organe de distribution D300 associé aux actionneurs A300 de l'atterrisseur auxiliaire 300.

Le contrôleur de réseau B est également relié à deux unités de commande B1 et B2 qui sont aptes à générer des consignes ou des ordres à destination des modules de puissance et des organes de distribution reliés au contrôleur de réseau B. Les deux unités de commande sont en permanence actives, l'une des unités de commande générant les consignes et ordres en étant surveillée par l'autre unité de commande.

Les unités de commande B1 et B2 sont donc aptes à gérer :
- le freinage des freins 2, 6, 3, 7 ;
- la manoeuvre de l'atterrisseur principal droit 200 et la manoeuvre de l'atterrisseur auxiliaire 300 ;
- l'orientation des roues de l'atterrisseur auxiliaire 300.

Pour ce faire, les unités de commande B1 et B2 reçoivent des informations de concentrateurs de données également reliés au réseau de communication B :
- un concentrateur de données CD26 qui reçoit et met en forme des informations électriques telles que la pression dans les pneumatiques des roues 2,6, la température des freins 2, 6, la vitesse de rotation des roues 2,6, ces informations provenant de capteurs associés aux freins 2, 6 ;
- un concentrateur de données CD37 qui reçoit et met en forme des informations électriques telles que la pression dans les pneumatiques des roues 3, 7, la température des freins 3, 7, la vitesse de rotation des roues 3, 7 que, ces informations provenant de capteurs associés aux freins 3 et 7 ;
- un concentrateur de données CD200 de l'atterrisseur principal droit 200 qui reçoit et met en forme des informations de position de l'atterrisseur (enfoncement de l'amortisseur, position angulaire du balancier portant les roues...) ou d'informations d'états liées à la manoeuvre de l'atterrisseur tels que des portes (ouverte, fermée), des crochets de verrouillage (verrouillé, déverrouillé) ;
- le concentrateur de données CD300 de l'atterrisseur auxiliaire 300 ;
- le concentrateur des données pilote CDP.

Les unités de commandes A1, A2, B1, B2 sont également connectées à un réseau de communication BC de l'aéronef, par exemple de type bidirectionnel asynchrone AFDX, auquel sont connectés d'autres systèmes de l'aéronef comme un concentrateur de données de vol CDV (pouvant fournir des informations telles que la température extérieure, la vitesse de l'aéronef...) et divers calculateurs, dont des calculateurs de commande de vol CCV. Le bus BC permet aux quatre unités de commande A1, A2, B1, B2 de dialoguer entre elles, de s'échanger des données et de se surveiller mutuellement, ce qui augmente encore la sécurité de l'architecture de l'invention.

Par ailleurs, et selon un aspect essentiel de l'invention, l'aéronef dispose d'un boîtier de maintenance BM1 qui est relié aux réseaux A et B et au réseau de communication BC, et qui est alimenté par les batteries de l'aéronef.

Le boîtier de maintenance BM1 est ainsi relié aux modules de puissance des freins et aux organes de distribution des actionneurs via les réseaux A et B afin de pouvoir actionner les freins ou les actionneurs de manoeuvre selon une séquence de maintenance lancée par le personnel de maintenance lors d'opérations de maintenance alors que l'aéronef est immobilisé au sol, par exemple dans un hangar.

Le boîtier de maintenance BM1 sert par exemple, lorsque l'aéronef est monté sur chandelles à et déverrouiller les crochets de trappes, ouvrir les portes de trappes, déverrouiller les atterrisseurs, ce qui provoque la descente des atterrisseurs sous l'action de la gravité. Cette séquence sert à vérifier le bon fonctionnement des actionneurs de verrouillage des trappes et des atterrisseurs. Le boîtier de maintenance sert également à actionner l'un ou l'autre des actionneurs de freinage pour tester leur bon fonctionnement. Par exemple, le boîtier de maintenance peut être câblé pour simuler un appui sur les pédales de frein, de manière simultanée ou différentielle.

L'énergie nécessaire à l'actionnement des actionneurs alors que l'aéronef est à l'arrêt peut être fourni soit par une source interne (par exemple un accumulateur dans le cas d'actionneurs hydrauliques, une batterie dans le cas d'actionneurs électromécaniques), ou encore par une source externe, par exemple un générateur externe relié à l'aéronef et apte à fournir de l'énergie alors que les groupes motopropulseurs et l'unité de puissance auxiliaire sont à l'arrêt. Quant aux signaux nécessaires à l'accomplissement des séquences, ils sont ici remontés via les réseaux A et B vers le boîtier de maintenance BM1.

Le boîtier de maintenance BM1 est activé par un signal d'activation manuelle S1 provenant par exemple d'un sélecteur situé dans le cockpit de l'aéronef ou dans un logement accessible par les équipes de maintenance.

Selon un aspect essentiel de l'invention, le boîtier de maintenance BM1 peut également être activé alors que l'aéronef n'est pas à l'arrêt pour servir d'unité de commande d'ultime secours en cas de défaillance des unités de commande A1,A2,B1,B2. La figure 3 illustre une logique d'activation permettant l'activation automatique du boîtier de maintenance lorsque les unités de commandes sont défaillantes.

En fonctionnement nominal, lorsque les unités de commande sont opérationnelles, le boîtier de maintenance est maintenu désactivé au moyen de signaux discrets générés par chacune des unités de commande A1, A2, B1, B2 et empêchant l'activation du boîtier de maintenance, selon la logique illustrée à la figure 3. Ce n'est que lorsque tous les unités de commandes sont défaillantes (combinaison ET des signaux SA1, SA2, SB1, SB2 provenant des unités de commande sur la figure 3) que le boîtier de maintenance BM1 devient actif et peut dès lors commander, à la place des unités de commande, les actionneurs associés. Si toutefois le boîtier de maintenance ne s'activait pas alors que toutes les unités de commande sont défaillantes, (ou si l'un des signaux SA1, SA2, SB1, SB2 était mal généré alors que le boîtier correspondant fonctionne par ailleurs parfaitement) il reste encore la ressource au pilote d'activer manuellement le boîtier de maintenance en manoeuvrant le sélecteur correspondant afin de bénéficier d'une possibilité d'actionnement des actionneurs concernés.

En pratique, les signaux SA1, SA2, SB1, SB2 sont ici des sorties de portes NON qui inversent des signaux générés par les unités de commande tant que celles-ci sont actives.

Les signaux sont mis à la masse (signal = TRUE) tant que les unités de commande sont en fonctionnement nominal. Si l'une des unités de commande venait à défaillir, le signal correspondant n'est plus connecté à la roue (signal = FALSE). La porte NON associée permet donc d'obtenir un signal TRUE en cas de panne de l'unité de commande .

Bien entendu, si l'aéronef ne comporte qu'une seule unité de commande, le boîtier de maintenance sera automatiquement activé dès réception d'un signal indiquant que l'unité de commande est défaillante. Lorsque le boîtier de maintenance BM1 est activé, il prend le pas sur les unités de commande, au moins pour les actionneurs commandables au moyen du boîtier de maintenance BM1.

On remarquera que dans l'architecture de l'invention, le boîtier de maintenance BM1 peut être activé alors que l'aéronef est en utilisation, par exemple en vol ou lors d'une phase de roulage au sol. L'énergie nécessaire à l'actionnement des actionneurs est alors normalement disponible, car les groupes motopropulseurs ou l'unité de puissance auxiliaire sont en service. A défaut, l'énergie sera puisée dans les organes de stockage, par exemple des accumulateurs hydrauliques ou des batteries. Le boîtier de maintenance, alimenté par la batterie est alors disponible même si l'avionique n'est plus disponible.

Ainsi, le boîtier de maintenance BM1 peut être utilisé en remplacement des unités de commande défaillantes, et ainsi faire office de boîtier secours permettant la mise en oeuvre de fonctions essentielles (descente des atterrisseurs, freinage de l'aéronef) même en cas de défaillance des unités de commande . Le boîtier de maintenance représente alors une voie supplémentaire de secours. Le cas échéant, elle peut remplacer les voies secours habituellement utilisées.

De préférence, le boîtier de maintenance BM1 est réalisé au moyen de composants électroniques simples, (du type FPGA, amplificateurs), sans micro-processeurs ni mémoire, de sorte à garantir une grande disponibilité. Un tel choix limite les fonctionnalités réalisables au moyen du boîtier.

Selon un aspect particulier de l'invention, le boîtier de maintenance est activé, alors même que les unités de commande fonctionnent parfaitement, en vue de mettre en oeuvre des tests fonctionnels. Ainsi, et sur ordre des unités de commande, des scénarios prédéterminés sont exécutés par le boîtier de maintenance pour tester les équipements reliées au boîtier de maintenance, à charge des unités de commande d'acquérir les signaux des capteurs associés et de comparer ces signaux aux résultats attendus. Par exemple, les scénarios prédéterminés sont les suivants :
- freinage : circulation d'un appui fictif sur les pédales de freins, et notamment d'un appui différentiel ;
- manoeuvre des atterrisseurs : alors que les atterrisseurs sont déployés et les portes non encore refermées, mise en fonctionnement des actionneurs de déverrouillage des portes et des atterrisseurs.

Ces tests viennent en complément des tests dits continus qui vérifient la validité des entrées des unités de commandes (circuit ouvert, circuit fermés, hors plage, cohérence des entrées...).

L'invention n'est pas limitée à ce qui vient d'être décrit mais englobe au contraire toute variante entrant dans le cadre défini par les revendications.

Bien que le boîtier de maintenance est ici activé dans une situation d'utilisation de l'aéronef en réponse à une défaillance de la ou des unités de commande, on pourra également activer le boîtier de maintenance alors que les unités de commandes fonctionnent normalement, par exemple pour faire exécuter une séquence de test au moyen du boîtier de maintenance.

Bien que dans l'exemple illustré, on ait indiqué que le boîtier de maintenance BM1 envoyait les signaux de commande aux modules de puissance et aux organes de distribution via les réseaux de communication habituellement utilisés par les unités de commande, ceci n'est pas limitatif, et on pourra également choisir de relier le boîtier de maintenance BM1 aux modules de puissance et aux organes de distribution par des liaisons spécifiques ne transitant pas par les réseaux utilisés par les unités de commande, afin de ségréguer la chaîne d'actionnement commandée par le boîtier de maintenance BM1. En effet, le réseau pourrait ne pas être disponible lorsque l'aéronef est dans l'état éteint, ou en cas de défaillance du réseau de communication. On aura alors intérêt à prévoir des liaisons spécifiques pour lui permettre de fonctionner alors que le réseau est défaillant.

On pourra pousser cette ségrégation encore plus loin en prévoyant dans les modules de puissance et les organes de distribution une voie ségréguée d'actionnement. Par exemple, lorsqu'il s'agit de commander une vanne de distribution hydraulique pour alimenter un vérin, on pourra prévoir dans cette vanne un deuxième solénoïde alimenté uniquement par le boîtier de maintenance pour commander la vanne, indépendamment d'un premier solénoïde alimenté par les unités de commande. Si l'actionneur est un actionneur électromécanique pourvu d'un moteur, on prévoira dans le moteur deux bobinages, l'alimentation de l'un des bobinages étant commandé par les unités de commande, et d'autre par le boîtier de maintenance.

De même, plutôt que de faire transiter les signaux des capteurs par des concentrateurs de données reliés à des réseaux numériques, on pourra prévoir des liaisons spécifiques entre les capteurs et le boîtier de maintenance, par exemple des liaisons analogiques parallèles contribuant encore plus à la ségrégation de la chaîne d'actionnement commandée par le boîtier de maintenance BM1. Une telle disposition est illustrée à la figure 4 sur laquelle on reconnaît les unités de commande A1, A2 ainsi que le boîtier de maintenance BM1. On a représenté ici de façon schématique les deux bobinages de l'actionneur (par exemple l'actionneur 305 de manoeuvre de l'atterrisseur auxiliaire), l'un des bobinages étant alimenté par les unités de commande A1, A2, l'autre étant alimenté directement par le boîtier de maintenance, via des voies d'alimentation spécifiques. En outre, les signaux des capteurs éventuellement nécessaires pour la mise en oeuvre desdits actionneurs seront fournis en boîtier de maintenance par des liaisons analogiques spécifiques.

En outre, bien que dans l'exemple illustré, on ait indiqué que le boîtier de maintenance BM1 était destiné à permettre l'actionnement de certains actionneurs de manoeuvre des atterrisseurs ou certains actionneurs de freinage, on pourra également confier au boîtier de maintenance l'actionnement d'autres actionneurs, comme par exemple, dans le cas d'un avion de transport militaire, l'actionneur de déverrouillage de la porte cargo à l'arrière du fuselage, ce qui permet son ouverture par le boîtier de maintenance, aussi bien au sol alors que l'aéronef est à l'arrêt qu'en vol.

Enfin, bien que l'on ait indiqué que le boitier de maintenance BM1 était alimenté par les batteries de l'aéronef, il pourra également être alimenté par le bus essentiel de l'aéronef ou encore par une source d'alimentation externe lorsque l'aéronef est au parking.

## Revendications

1. Procédé de gestion d'aéronef comportant des atterrisseurs portant un certain nombre de roues freinées, l'aéronef comportant :
- un système de manoeuvre des atterrisseurs comportant des actionneurs de manoeuvre (105, 205, 305) et d'accrochage (106, 206, 306) des atterrisseurs et de trappes associées,
- un système de freinage comportant des actionneurs de freinage des roues de l'aéronef;
- au moins une unité de commande (A1, A2, B1, B2) pour commander la manoeuvre des atterrisseurs et le freinage ;
- au moins un boîtier de maintenance (BM1) pour commander sélectivement au moins certains des actionneurs desdits systèmes alors que l'aéronef est dans l'état éteint lors d'opérations de maintenance de l'un ou l'autre des systèmes ;
**caractérisé en ce que** le procédé comporte l'étape d'activer le boîtier de maintenance alors que l'aéronef n'est pas à l'état éteint pour assurer, au moyen du boîtier de maintenance, l'actionnement des actionneurs reliés au boîtier de maintenance, notamment en cas de défaillance de l'unité de commande.

2. Procédé selon la revendication 1, dans lequel l'activation du boîtier de maintenance est effectuée en réponse au moins à :
- un ordre d'activation manuel ;
- un signal provenant de l'unité de commande indiquant que celle-ci est défaillante.

3. Procédé selon la revendication 1, comportant l'utilisation de plusieurs unités de commande susceptibles de commander les actionneurs de manoeuvre et de freinage, dans lequel l'activation du boîtier de maintenance est effectuée en réponse au moins à :
- un ordre d'activation manuel (S1) ;
- une combinaison ET de signaux (SA1, SA2, SB1, SB2) provenant de toutes les unités de commande indiquant chacun que l'unité de commande correspondante est défaillante.

4. Procédé selon la revendication 1, dans lequel on assure l'alimentation du boîtier de maintenance à l'aide de la batterie de l'aéronef.

5. Procédé selon la revendication 1, dans lequel on relie les actionneurs commandés par le boîtier de maintenance à ce dernier par des voies d'alimentation spécifiques.

## Patentansprüche

1. Verfahren zum Steuern eines Flugzeugs, umfassend Fahrwerke, die eine bestimmte Anzahl von gebremsten Rädern tragen, wobei das Flugzeug umfasst:
- ein Betätigungssystem zum Betätigen der Fahrwerke, das Stellaktuatoren (105, 205, 305) und Verriegelungsaktuatoren (106, 206, 306) zum Verstellen und Verriegeln der Fahrwerke und dazugehöriger Klappen umfasst,
- ein Bremssystem, das Bremsaktuatoren zum Bremsen der Räder des Flugzeugs umfasst,
- mindestens eine Steuereinheit (A1, A2, B1, B2) zum Steuern der Betätigung der Fahrwerke und der Bremse,
- mindestens eine Wartungsbox (BM1), um mindestens einige der Aktuatoren der genannten Systeme selektiv zu steuern, während das Flugzeug bei Wartungsarbeiten an dem einen oder dem anderen System im Ruhezustand ist,
**dadurch gekennzeichnet, dass** das Verfahren den Schritt des Aktivierens der Wartungsbox umfasst, während das Flugzeug nicht im Ruhezustand ist, um mit Hilfe der Wartungsbox die Betätigung der mit der Wartungsbox verbundenen Aktuatoren sicherzustellen, insbesondere im Falle eines Ausfalls der Steuereinheit.

2. Verfahren nach Anspruch 1, wobei die Aktivierung der Wartungsbox mindestens in Antwort auf:
- einen manuellen Aktiviervierungsbefehl,
- ein Signal, das aus der Steuereinheit stammt und anzeigt, dass diese funktionsuntüchtig ist,
erfolgt.

3. Verfahren nach Anspruch 1, umfassend den Einsatz mehrerer Steuereinheiten, die in der Lage sind, die Stell- und Bremsaktuatoren zu steuern, wobei die Aktivierung der Wartungsbox mindestens in Antwort auf:
- einen manuellen Aktivierungsbefehl (S1),
- eine Kombination ET aus Signalen (SA1, SA2, SB1, SB2), die aus allen Steuereinheiten stammen und jeweils anzeigen, dass die entsprechende Steuereinheit funktionsuntüchtig ist,
erfolgt.

4. Verfahren nach Anspruch 1, wobei man die Versorgung der Wartungsbox mit Hilfe der Batterie des Flugzeugs sicherstellt.

5. Verfahren nach Anspruch 1, wobei man die Aktuatoren, die von der Wartungsbox gesteuert werden, mit dieser letztgenannten über spezifische Versorgungswege verbindet.

## Claims

1. A method of managing an aircraft having undercarriages carrying a certain number of braked wheels, the aircraft including:
· a system for operating the undercarriages including raising actuators (105, 205, 305) and latching actuators (106, 206, 306) for the undercarriages and the associated hatches;
· a braking system including braking actuators for braking the wheels of the aircraft;
· at least one control unit (A1, A2, B1, B2) for controlling the operation of the undercarriages and the braking; and
· at least one maintenance unit (BM1) for selectively controlling at least some of the actuators of said systems while the aircraft is in a switched-off state during maintenance operations on one or another of the systems;
the method being **characterized in that** it includes the step of activating the maintenance unit while the aircraft is not in the switched-off state in order to use the maintenance unit for actuating actuators connected to the maintenance unit, in particular in the event of a failure of the control unit.

2. A method according to claim 1, wherein the maintenance unit is activated in response to at least:
· a manual activation order; and/or
· a signal coming from a control unit indicating that the control unit has failed.

3. A method according to claim 1, including the use of a plurality of control units suitable for controlling the operating and braking actuators, in which the maintenance unit is activated in response at least to:
· a manual activation order (S1); and/or
· an AND combination of signals (SA1, SA2, SB1, SB2) coming from all of the control units and indicating that each corresponding control unit has failed.

4. A method according to claim 1, wherein the maintenance unit is powered with the help of the battery of the aircraft.

5. A method according to claim 1, wherein the actuators controlled by the maintenance unit are connected thereby by specific power supply channels.
